# EUROPÄISCHE PATENTSCHRIFT

(11) **EP 1 677 043 B1**
(45) Veröffentlichungstag und Bekanntmachung des Hinweises auf die Patenterteilung: **27.02.2008**
(21) Anmeldenummer: 05028129.4
(22) Anmeldetag: 22.12.2005
(51) Int. Cl.: F16L 41/08, F16L 5/10, H02G 3/22

(54) **Anschluss- Durchführungsvorrichtung**
Connecting and lead-through device
Dispositif de raccordement et de traversée

(30) Priorität: 30.12.2004 DE 202004020119 U
(43) Veröffentlichungstag der Anmeldung: 05.07.2006
(73) Patentinhaber: REHAU AG + Co, 95111 Rehau (DE)
(72) Erfinder: Kania, Guido, 91080 Marloffstein (DE); Hendel, Roland, 91086 Aurachtal (DE)

(56) Entgegenhaltungen:
- EP-A- 0 342 326
- EP-A- 0 795 712
- AU-A- 3 619 378
- DE-U1- 9 207 041
- FR-A- 2 561 324
- US-A- 4 613 169
- US-B1- 6 453 484

## Beschreibung

Die Erfindung betrifft eine Anschluss- und Durchführungsvorrichtung zur Durchführung einer Rohrleitung durch ein Wandelement.

Bei der Durchführung von Rohrelementen durch Wandelemente wird, wie dies durch offenkundige Vorbenutzung bekannt ist, oftmals ein Ringspalt zwischen der Rohrleitung und einer Durchführungsöffnung des Wandelements mit Bauschaum ausgeschäumt oder es wird die Rohrleitung im Bereich der Durchführungsöffnung mit Mineralwolle umwickelt. Hierdurch ist eine sichere Abdichtung zwischen dem Rohr und der Maueröffnung in der Praxis nicht gewährleistet.

Aus der EP 0 795 712 B1 ist eine Anschlussvorrichtung zwischen einer Nebenrohrleitung und einer Rohrwand insbesondere einer Hauptrohrleitung bekannt.

Die DE 92 07 041 U1 beschreibt einen Schraubdübel zum Befestigen von Gewindeteilen.

Die AU 36193/78 A1 offenbart eine Anschlussvorrichtung für eine Nebenleitung einer Hauptleitung oder eines Behälters.

Die EP 0 342 326 A2 offenbart eine Halterbefestigung an einer druckmittelbetätigten Baugruppe, insbesondere an einem Bremskraftverstärker eines Kraftfahrzeugs.

Die US 6,453,484 B1 offenbart eine Durchführungsvorrichtung für eine Düsenleitung eines Whirlpools.

Die US 4,613,169 beschreibt eine abgedichtete Anschlussvorrichtung für den Sanitärbereich.

Die FR 2 561 324 A1 offenbart eine Einrichtung zur Befestigung eines Ansatzstücks an einer dünnen Wand.

Ausgehend von diesem Stand der Technik ist es die Aufgabe der vorliegenden Erfindung, eine Anschluss- und Durchführungsvorrichtung zur Durchführung einer Rohrleitung durch ein Wandelement zu schaffen, mit der eine sichere Abdichtung zwischen der Rohrleitung und dem Wandelement gewährleistet ist.

Diese Aufgabe ist erfindungsgemäß gelöst durch eine Anschluss- und Durchführungsvorrichtung mit den im Anspruch 1 angegebenen Merkmalen.

Erfindungsgemäß wurde erkannt, dass der prinzipielle Aufbau der Anschlussvorrichtung aus der EP 0 795 712 B1 auch für Wanddurchführungen eingesetzt werden kann. Hierzu waren allerdings deutliche Modifikationen dieser vorbekannten Rohr-Anschlussvorrichtung erforderlich. Zum einen musste die Anschlussdichtung so gestaltet werden, dass sie an das Wandelement anlegbar war. Zum anderen musste die Verbindungshülse gegenüber der Anschlussdichtung so weit verlängert werden, dass ein Anschluss von Rohrelementen beiderseits der Anschlussdichtung und damit des Wandelements möglich war. Die erfindungsgemäße Lösung ist flexibel, einfach zu montieren und führt zu einer sicheren Abdichtung der Rohrleitung zum Wandelement. Die Verbindungshülse hat ein Außengewinde und die Anschlussdichtung ein hiermit zusammenwirkendes Innengewinde, wobei das Außengewinde konusförmig derart ausgebildet ist, dass es eine definierte Strecke weit in die Anschlussdichtung eingeschraubt ist. Hierdurch ist eine definierte Verpressung der Anschlussdichtung zwischen der Verbindungshülse und dem Wandelement im Bereich der Durchführungsöffnung gegeben, so dass die Anschlussdichtung ihre Dichtfunktion gut ausüben kann. Die Verbindungshülse hat einen Durchführungsabschnitt, dessen Durchmesser derart dimensioniert ist, dass ein Anschluss des Durchführungsabschnitts an eine handelsübliche Rohrverbindungsmuffe möglich ist. Dies erleichtert die Anbringung der durchzuführenden Rohrelemente

Die Anschlussdichtung kann einen Anschlagbund zur Anlage am Wandelement im Umfangsbereich um die Durchführungsöffnung aufweisen. Hierdurch ist eine definierte Positionierung der Anschlussdichtung am Wandelement gewährleistet.

Bei einer Ausführungsform der Verbindungshülse weist diese einen inneren Anschlagbund zum definierten Einschieben eines der Rohrelemente auf. Hierdurch ist eine definierte Positionierung der dem Wandelement benachbarten Rohrelemente gegeben. Alternativ ist es möglich, die Verbindungshülse ohne einen derartigen inneren Anschlagbund auszuführen.

In diesem Falle kann ein Rohrelement der durchzuführenden Rohrleitung durch die Verbindungshülse hindurchgesteckt werden. Dies führt zu flexiblen Montagelösungen.

Die Verbindungshülse kann eine Mehrzahl von Haltenasen zur Halterung eines die Verbindungshülse dicht verschließenden Elements aufweisen. Die Haltenasen können insbesondere einstückig an der Verbindungshülse angeformt sein. Hierdurch ist ein problemloser Verschluss der Verbindungshülse, z. B. zum Zwecke einer Dichtheitsprüfung, möglich.

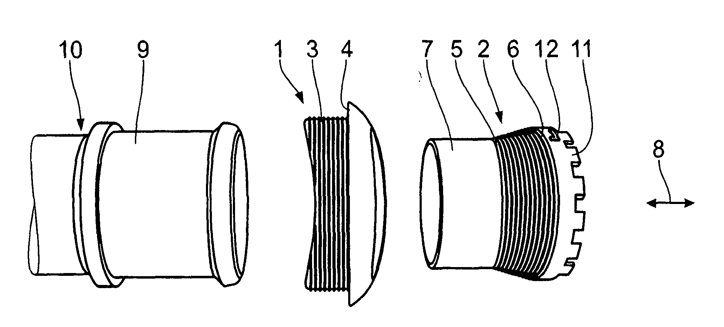

Ein Ausführungsbeispiel der Erfindung wird nachfolgend anhand der Zeichnung näher erläutert. Die einzige Figur zeigt eine Explosionsdarstellung der Anschluss- und Durchführungsvorrichtung mit einem Rohrelement der durchzuführenden Rohrleitung.

Die Anschluss- und Durchführungsvorrichtung dient dazu, eine Rohrleitung durch ein nicht dargestelltes Wandelement hindurchzuführen. Die Anschluss- und Durchführungsvorrichtung umfasst eine ringförmige Anschlussdichtung 1 und eine Verbindungshülse 2. Eine äußere Mantelwand 3 der Anschlussdichtung 1 ist an einer hierzu komplementären Innenwand einer Durchführungsöffnung im Wandelement anlegbar. Zur reibschlüssigen Anlage der Mantelwand 3 an der Innenwand der Durchführungsöffnung weist die Mantelwand 3 in Umfangsrichtung verlaufende Rippen auf. Zur Anlage am Wandelement im Umfangsbereich um die Durchtrittsöffnung hat die Anschlussdichtung 1 einen Anschlagbund 4.

Die Verbindungshülse 2 ist über eine äußere Mantelwand 5 dicht an einer Innenwand der ringförmigen Anschlussdichtung 1 anlegbar. Die Mantelwand 5 der Verbindungshülse 2 weist ein Außengewinde 6 und die Anschlussdichtung 1 ein hiermit zusammenwirkendes Innengewinde auf. Im Bereich des Außengewindes 6 erweitert sich die Verbindungshülse 2 derart, dass sich der Durchmesser des Außengewindes 6 entgegen der Einschraubrichtung stetig vergrößert. An dem Abschnitt des Außengewindes 6 mit dem kleinsten Umfang schließt sich einstückig ein Durchführungsabschnitt 7 der Verbindungshülse 2 an. Der Außendurchmesser des Durchführungsabschnitts 7 beträgt bspw. 160 mm. Auch andere Außendurchmesser im Bereich zwischen 50 und 300 mm, vorzugsweise zwischen 80 und 200 mm sind möglich. Die Verbindungshülse 2 mit dem Durchführungsabschnitt 7 ist insgesamt in Durchführungsrichtung 8 länger als die Anschlussdichtung 1. Bei in die Anschlussdichtung 1 eingeschraubtem Außengewinde 6 steht der Durchführungsabschnitt 7 stirnseitig so weit über die Anschlussdichtung 1 über, dass auf den Durchführungsabschnitt 7 eine Rohrverbindungsmuffe 9 der Rohrleitung aufgeschoben werden kann.

In die gegenüberliegende Seite der Rohrverbindungsmuffe 9 ist ein abschnittsweise dargestelltes Rohrelement 10 der Rohrleitung eingeschoben. Von der dem Rohrelement 10 gegenüberliegenden Seite her kann in die Verbindungshülse 2 ein zweites Rohrelement eingeschoben werden.

Bei einer ersten Ausführungsform der Verbindungshülse 2 hat diese einen inneren Anschlagbund zum definierten Einschieben dieses zweiten Rohrelements. Bei einer zweiten Ausführungsform fehlt ein derartiger innerer Anschlagbund, so dass das Rohrelement durch die Verbindungshülse 2 hindurchgesteckt werden kann.

Am dem dem Durchführungsabschnitt 7 gegenüberliegenden Ende weist die Verbindungshülse 2 Haltezinnen 11 einer Einschraubkrone zum Eingriff eines Schraubwerkzeugs zum Einschrauben der Verbindungshülse 2 in die Anschlussdichtung 1 auf. An den Mantelabschnitt 3 der Verbindungshülse 2, der der Einschraubkrone benachbart ist, sind mehrere außen angeformte, L-förmige Haltenasen 12 angeformt. Letztere dienen zum Haltern eines nicht dargestellten Verschlussdeckels, z. B. eines Muffenstopfens, wenn die Verbindungshülse 2 z. B. für eine Dichtheitsprüfung endseitig verschlossen werden soll.

Die Anschluss- und Durchführungsvorrichtung wird folgendermaßen montiert: Zunächst wird die Anschlussdichtung 1 in die Durchführungsöffnung des Wandelements eingesetzt bis der Anschlagbund 4 am Umfangsbereich um die Durchführungsöffnung anliegt. Anschließend wird die Verbindungshülse 2 mit dem Durchführungsabschnitt 7 in die Anschlussdichtung 1 eingesteckt und in diese eingeschraubt. Aufgrund der konusförmigen Erweiterung des Außengewindes 6 kommt es bei einem vorgegebenen EinschraubDrehmoment zu einer erwünschten Verpressung der Anschlussdichtung 1 zwischen der Verbindungshülse 2 und der Innenwand der Durchführungsöffnung des Wandelements, so dass die Anschlussdichtung 1 die Verbindungshülse 2 gegen das Wandelement sicher abdichtet. In dieser dichtenden Position steht der Durchführungsabschnitt 7 über die Anschlussdichtung 1 so weit über, dass die Rohrverbindungsmuffe 9 auf den Durchführungsabschnitt 7 aufgesteckt werden kann. Nun können einerseits in die Verbindungshülse 2 und andererseits in die Rohrverbindungsmuffe 9 die an die Anschluss- und Durchführungsvorrichtung sich anschließenden Rohrelemente eingesteckt werden. Es resultiert eine dichte Wanddurchführung für die Rohrleitung.

Alternativ ist es bei der Verwendung einer Verbindungshülse 2 ohne inneren Anschlagbund möglich, ein Rohrelement nach dem Montieren der Verbindungshülse 2 durch diese hindurch zu stecken und beiderseits über Rohrverbindungsmuffen 9 mit weiteren Rohrelementen zu verbinden.

Durch die Rohrleitung kann ein Fluid, insbesondere Wasser, z. B. Abwasser, geführt werden. Andererseits ist es natürlich auch möglich, andere Medien wie Feststoffe, z. B. Schüttgut oder Kabel, durch die Rohrleitung zu führen.

## Patentansprüche

1. Anschluss- und Durchführungsvorrichtung zur Durchführung einer Wasser-Rohrleitung durch ein Wandelement
- mit einer ringförmigen Anschlussdichtung (1), deren äußere Mantelwand (3) an einer Innenwand einer Durchführungsöffnung im Wandelement anlegbar ist,
- mit einer Verbindungshülse (2),
-- die über ihre äußere Mantelwand (5) dicht an einer Innenwand der Anschlussdichtung (1) anliegt und
-- in die ein Rohrelement der durchzuführenden Wasser-Rohrleitung einschiebbar ist,
- wobei die Verbindungshülse (2) derart länger ist als die Anschlussdichtung (1) und definiert so weit in die Anschlussdichtung (1) eingeschoben ist, dass beiderseits des Wandelements Rohrelemente (9, 10) der Rohrleitung an die Verbindungshülse (2) anbringbar sind,
wobei
- die Verbindungshülse (2) ein Außengewinde (6) und dass die Anschlussdichtung (1) ein hiermit zusammenwirkendes Innengewinde aufweist, wobei das Außengewinde (6) konusförmig derart ausgebildet ist, dass es eine definierte Strecke weit in die Anschlussdichtung (1) einschraubbar ist,
- die Verbindungshülse (2) einen Durchführungsabschnitt (7) mit einem Außendurchmesser zwischen 50 und 300 mm aufweist, dessen Durchmesser derart dimensioniert ist, dass ein Anschluss des Durchführungsabschnitts (7) an eine handelsübliche Rohrverbindungsmuffe (9) möglich ist, wobei der Durchführungsabschnitt (7) stirnseitig so weit über die Anschlussdichtung (1) übersteht, dass auf den Durchführungsabschnitt (7) eine Rohrverbindungsmuffe (9) der Wasser-Rohrleitung aufgeschoben werden kann.

2. Anschluss- und Durchführungsvorrichtung nach Anspruch 1, **dadurch gekennzeichnet, dass** die Anschlussdichtung (1) einen Anschlagbund (4) zur Anlage am Wandelement im Umfangsbereich um die Durchführungsöffnung aufweist.

3. Anschluss- und Durchführungsvorrichtung nach Anspruch 1 oder 2, **dadurch gekennzeichnet, dass** die Verbindungshülse (2) einen inneren Anschlagbund zum definierten Einschieben eines der Rohrelemente aufweist.

4. Anschluss- und Durchführungsvorrichtung nach einem der Ansprüche 1 bis 3, **dadurch gekennzeichnet, dass** die Verbindungshülse (2) eine Mehrzahl von Haltenasen (12) zur Halterung eines die Verbindungshülse (2) dicht verschließenden Elements aufweist.

5. Anschluss- und Durchführungsvorrichtung nach einem der Ansprüche 1 bis 4, **dadurch gekennzeichnet, dass** die Verbindungshülse (2) ein Dichtelement aufweist.

6. Anschluss- und Durchführungsvorrichtung nach Anspruch 5, **dadurch gekennzeichnet, dass** das Dichtelement im Lumen der Verbindungshülse (2) angeordnet ist.

## Claims

1. Connecting and lead-through device for leading a pipeline through a wall element
- having an annular connecting seal (1), the outer lateral wall (3) of which can be placed against an inner wall of a lead-through opening in the wall element,
- having a connection sleeve (2),
-- which bears via its outer lateral wall (5) tightly against an inner wall of the connecting seal (1) and
-- into which a pipe element of the water pipeline to be led through can be pushed,
- wherein the connection sleeve (2) is longer than the connecting seal (1) in such a way that, and is pushed in a defined manner into the connecting seal (1) to such an extent that, pipe elements (9, 10) of the pipeline can be attached to the connection sleeve (2) on both sides of the wall element, wherein
- the connection sleeve (2) has an external thread (6) and the connecting seal (1) has an internal thread interacting with it, wherein the external thread (6) is designed to be conical in such a way that it can be screwed into the connecting seal (1) over a defined distance,
- the connection sleeve (2) has a lead-through section (7) having an outside diameter of between 50 and 300 mm, the diameter of said lead-through section (7) being dimensioned in such a way that it is possible to connect the lead-through section (7) to a commercially available pipe connection socket (9), wherein the lead-through section (7) projects at the end face beyond the connecting seal (1) to such an extent that a pipe connection socket (9) of the water pipeline can be pushed onto the lead-through section (7).

2. Connecting and lead-through device according to Claim 1, **characterized in that** the connecting seal (1) has a stop collar (4) for bearing against the wall element in the circumferential region around the lead-through opening.

3. Connecting and lead-through device according to Claim 1 or 2, **characterized in that** the connection sleeve (2) has an inner stop collar for pushing in one of the pipe elements in a defined manner.

4. Connecting and lead-through device according to one of Claims 1 to 3, **characterized in that** the connection sleeve (2) has a plurality of retaining lugs (12) for retaining an element tightly closing the connection sleeve (2).

5. Connecting and lead-through device according to one of Claims 1 to 4, **characterized in that** the connection sleeve (2) has a sealing element.

6. Connecting and lead-through device according to Claim 5, **characterized in that** the sealing element is arranged in the lumen of the connection sleeve (2).

## Revendications

1. Dispositif de raccordement et de passage pour faire passer une tuyauterie à travers un élément de paroi
- avec un joint de raccordement (1) annulaire, dont la paroi d'enveloppe extérieure (3) est susceptible de s'appliquer sur une paroi intérieure d'une ouverture de passage dans l'élément de paroi
- avec une douille de liaison (2),
-- qui par l'intermédiaire de sa paroi d'enveloppe extérieure (5) s'appuie intimement sur une paroi intérieure du joint de raccordement (1) et
-- dans laquelle un élément tubulaire de la tuyauterie d'eau à faire passer est susceptible d'être inséré,
- la douille de liaison (2) étant plus longue que le joint de raccordement (1) et insérée de façon définie assez loin dans le joint de raccordement (1), de sorte que de part et d'autre de l'élément de paroi, des éléments tubulaires. (9, 10) de la tuyauterie soient susceptibles d'être montés sur la douille de liaison (2).
- la douille de liaison (2) comportant un filetage (6) et le joint de raccordement (1) comportant un taraudage coopérant avec ce dernier, le filetage (6) étant conçu sous forme conique, de manière à pouvoir être vissé sur une profondeur définie dans le joint de raccordement (1),
- la douille de liaison (2) comportant une section de passage (7) avec un diamètre extérieur compris entre 50 et 300 mm, dont le diamètre est dimensionné de manière à ce qu'un raccordement de la section de passage(7) soit possible sur un manchon de raccordement fileté (9) disponible dans le commerce, la section de passage (7) débordant côté frontal du joint de raccordement (1) assez loin pour permettre d'emboîter sur la section de passage (7) un manchon de raccordement fileté (9) de la tuyauterie d'eau.

2. Dispositif de raccordement et de passage selon la revendication 1, **caractérisé en ce que** le joint de raccordement (1) comporte un épaulement de butée (4) pour l'appui sur l'élément de paroi, dans la zone périphérique autour de l'ouverture de passage.

3. Dispositif de raccordement et de passage selon la revendication 1 ou 2, **caractérisé en ce que** la douille de liaison (2) comporte un épaulement de butée intérieur, pour l'insertion définie de l'un des éléments tubulaires.

4. Dispositif de raccordement et de passage selon l'une quelconque des revendications 1 à 3, **caractérisé en ce que** la douille de liaison (2) comporte une pluralité de tenons de retenue (12) pour la fixation d'un élément fermant de façon étanche la douille de liaison (2).

5. Dispositif de raccordement et de passage selon l'une quelconque des revendications 1 à 4, **caractérisé en ce que** la douille de liaison (2) comporte un élément d'étanchéité.

6. Dispositif de raccordement et de passage selon la revendication 5, **caractérisé en ce que** l'élément d'étanchéité est disposé dans la lumière de la douille de liaison (2).
